# EUROPEAN PATENT SPECIFICATION

(11) **EP 1 550 337 B1**
(45) Date of publication and mention of the grant of the patent: **28.03.2012**
(21) Application number: 02807973.9
(22) Date of filing: 09.10.2002
(51) Int. Cl.: H04L 29/06, H04L 29/08, H04W 4/06, H04W 8/18

(54) **A communication system**
Kommunikationssystem
Système de communication

(43) Date of publication of application: 06.07.2005
(73) Proprietor: Nokia Siemens Networks Oy, 02610 Espoo (FI)
(72) Inventor: LEPPANEN, Eva-Maria, FIN-33820 Tampere (FI); KALLIOKULJU, Juha, FIN-37470 Vesilahti (FI); LONNFORS, Mikko, FIN-00550 Helsinki (FI)
(74) Representative: Borgström, Markus
(86) International application number: PCT/IB2002/004388
(87) International publication number: WO 2004/034719

(56) References cited:
- EP-A- 1 248 484
- WO-A-01/72055
- WO-A-02/43351
- WO-A-02/096128
- SIMPLE W.G. ET AL.: 'A SIP Event Package for List Presence; draft-ietf-simple-presencelist package-00.txt' IETF STANDARD-WORKING-DRAFT, INTERNET ENGINEERING TASK FORCE, IETF, CH vol. SIMPLE, 24 June 2002, XP015027634 ISSN: 0000-0004

## Description

### Field of invention

The present invention relates to a communication system, in particular to the provision a presence service in a communication system.

### Background to the Invention

A diverse range of communication systems are in use today enabling communication between two or more entities, such as user equipment and/or other nodes associated with the system.

Communication systems proving wireless communication for user terminals or other nodes are known. An example of a wireless system is a public land mobile network (PLMN). A PLMN is typically a cellular network wherein a base transceiver station (BTS) or similar access entity serves user equipment (UE) such as mobile stations (MS) via a wireless interface. The operation of the apparatus required for the communication is usually controlled by one or more control entities, which themselves may be interconnected. One or more gateway nodes provide for connecting the PLMN to other networks. Examples of other such networks are another cellular network, a public switched telephone network (PSTN) and packet switched data networks such as an IP (Internet Protocol) based network. The communication between the user equipment and the other elements of the communication system are based on an appropriate communications protocol, which defines the "rules" under which communication is handled in the system.

In the current third generation (3G) wireless system, there are defined various servers for the handling of different communication services for mobile users. These include servers that provide call state control functions, known as CSCFs. Control functions may also be provided by entities such as a home subscriber server (HSS) and applications by various application servers. The HSS is typically for permanently storing the user's profile and used during authentication. For example, in the Release 5 architecture for 3G, as specified by the 3^{rd} Generation Partnership Project (3GPP), these entities can be found located in the IP Multimedia Subsystem (IMS).

The IMS network may sit at the hub of the 3G architecture, supporting an IP based network that handles both traditional voice telephony and multimedia services. The 3GPP has chosen Session Initiation Protocol (SIP) as a core session signalling protocol for 3G networks. SIP has been developed by the Internet Engineering task Force (IETF). Those interested can find the 3GPP specification 24.229 describing the IMS network's basic operation from an SIP perspective titled_ "IP Multimedia Call Control Protocol based on SIP and SDP" at http://www.3gpp.org/ftp/Specs/Latest-drafts/24229-201.zip. SIP is a request/response style protocol, in the sense that for every message sent from a source, there is an associated response from the destination confirming receipt of the sent message.

For example, in a 3G network, when a user first switches on his mobile terminal, he must register his user ID or address with the network before allowing the terminal to fully connect. This is done by sending an SIP 'REGISTER' message from the terminal to the IMS, which includes details of the users address. The IMS receives and processes this information using a serving call state control function (S-CSCF), which in this context is referred to as the "registrar"-. This registration information may include the status of the user such as user address, location, terminal capability and user availability. The IMS acknowledges the registration by sending a suitable acknowledge message (e.g. 200 OK message) in accordance with SIP. Subsequent registrations also take place (re-'REGISTER') whenever the preceding registration has expired, or when there is a change in the status of the user. When a user wishes to set up a session with another user, such as a voice call or messaging session (there is another way of sending messages i.e. with SIP MESSAGE and in this case session establishment is not required), the session negotiation will also be performed under SIP.

Application servers (AS) may supply services via the IMS such as instant messaging, local traffic reports, and conferencing facilities. An AS may reside within the IMS network, or outside of it. Typically the AS is external when the service supported is provided by a third party.

One specific example of status information is presence information. Users or application servers subscribing to a presence service can determine e.g. the ability and availability of another user to accept a call (this kind of feature may or may not be supported depending on the equipment and service provider) among other presence features/attributes. However, in systems supporting SIP, presence can assume a variety of indicators such as 'in the office and available for all calls', 'at home and available for private calls only', and 'busy in call' (or at least appear that way). Thus presence information allows a user to ascertain the availability of another user before attempting to make a call. The presence service can provide more than just information such as available/not available. It can contain visual, animated or sound elements and can describe various issues e.g. related to a game session. This information is relayed to the network.

It has been proposed to allow a user to define groups with the presence service. The groups list other users from which the user wishes to obtain presence information. For example a user could have one group which includes the friends of the user and one group which defines work colleagues of the user. With a single request, a user (sometimes referred to as a watcher) is able to obtain presence information about all of the users in a group. This presence information typically includes a relatively large amount of information. Accordingly, when a user requests presence information from a group of users, the user will receive all of this information. However, the user often only wants to know some of the information and not all. Accordingly, the user receives unwanted information which waste radio resources in a radio environment and also can waste resources of the user such as battery power.

It has been proposed that where a user wants to obtain presence information about one other user that the user is able to include filters to reduce the data from the presence server, that is the presence information. These filters are able to reduce the data from the presence server to include only parts that are of interest for the user. However there has been no proposal to apply this to a group of users or discussion as to how this would be achieved.

WO 02/43351 discloses a method and apparatus for determining and maintaining user presence information including capturing user presence data with an application presence server. The application presence server can be configured to update user presence data as a user initiates or exits an application. User presence data is stored in a user presence repository and can be provided via Internet-based or other connections to applications executed on external networks.

SIP Extensions for Presence; Rosenberg et al., Internet Engineering Task Force, Internet draft discloses proposals for extensions to SIP for subscriptions and notifications of user presence. Subscriptions and notifications of user presence are supported by defining an event package within the general SIP event notification framework.

### Summary of the invention

Embodiments of the present invention aim to overcome one or several of the above problems.

According to one aspect of the present invention, there is provided a communication system comprising a plurality of users with which presence information is associated, said presence information comprising a plurality of parts; and a presence list server for: storing information defining at least one group, said group containing a plurality of users; storing predefined filtering rules defining for said at least one user of said group what parts of said presence information are to be provided to a requester in response to a request for presence information for at least one of said at least one groups from said requester, said filtering rules being defined by said requester; and wherein said user is provided a service in use where a mapping between an identity of the predefined filtering rules and an identity of at least one group is defined as part of subscription information of said user, and no indication of said filtering rules is needed in a subscribe message.

According to a second aspect of the present invention, there is provided a communication method comprising the steps of: defining and storing in a presence list server at least one group, said group containing a plurality of users with which presence information is associated, said presence information comprising a plurality of parts; defining predefined filtering rules for said users of said group, said filtering rules defining what parts of said presence information are to be provided, to a requester in response to request for presence information for at least one of said at least one groups from said requester, said filtering rules being defined by said requester and stored in said presence list server, and providing to said user a service where a mapping between an identity of the predefined filtering rules and an identity of at least one group is defined as part of subscription information of said user, and no indication of said filtering rules is needed in a subscribe message.

According to a third aspect of the present invention, there is provided a presence list server for storing first information defining at least one group, said group containing a plurality of users with which presence information is associated, said presence information comprising a plurality of parts, and predefined filtering rules defining for said at least one user of said group what parts of said presence information are to be provided to a requester in response to request for presence information for at least one of said at least one groups from said requester, said predefined filtering rules being defined by said requester, wherein said user is provided a service in use where a mapping between an identity of the predefined filtering rules and an identity of at least one group is defined as part of subscription information of said user, and no indication of said filtering rules is needed in a subscribe message.

### Brief Description of Drawings

For a better understanding of the present invention and as to how the same may be carried into effect, reference will now be made by way of example only to the accompanying drawings, in which:
Figure 1 illustrates a communication system wherein the present invention can be applied;
Figure 2 illustrates schematically an embodiment of the invention;
Figure 3 illustrates the message flow of one embodiment of the present invention; and
Figure 4 illustrates the IMS part of the system of Figure 1 in more detail.

### Detailed description of embodiments

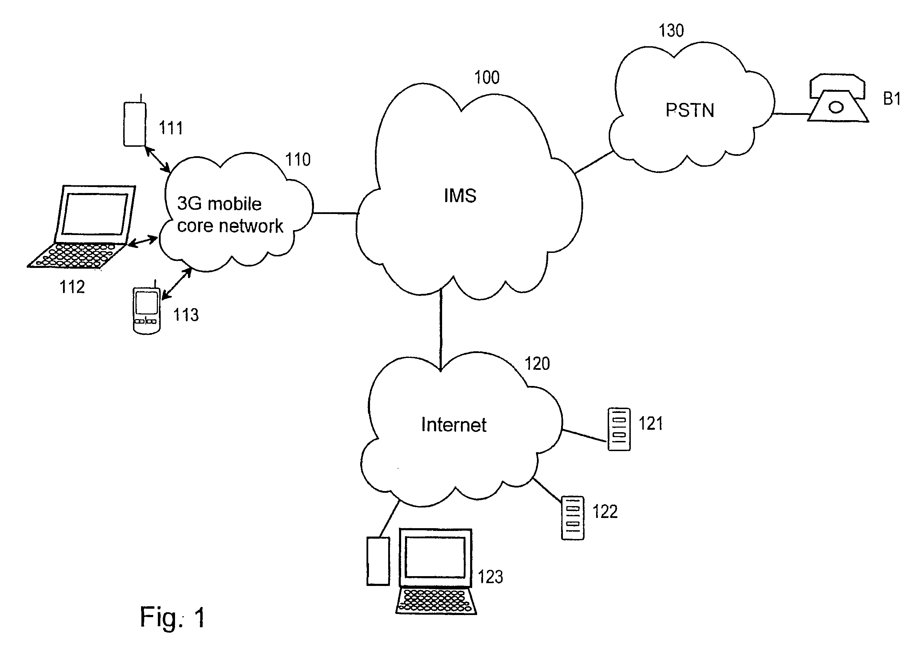

Reference will now first be made to the Figure 1, which illustrates a typical 3^{rd} Generation (3G) Wireless telecommunications system operating under the Universal Mobile Telecommunications System (UMTS). At the hub of this system is the IP Multimedia Subsystem (IMS) 100 network, which routes calls and all kinds of sessions between two or more users There could be sessions also between users and network elements e.g. application server. of the network and provides other network functions. Examples of users are mobile terminal 111, laptop 112, personal desktop assistant (PDA) 113, Public Switched Telephone Network (PSTN) telephone 131, computer terminal 123, and application server 121, and application server 122. The IMS uses an IP based network to handle these calls, which may include both voice calls and multimedia calls.

The IMS network effectively acts as a gateway in a 3G system between the users 111, 112, 113, and other networks such as a PSTN 130 and external IP based network 120. Signalling between the mobile terminal and other users of the IMS network, and within the IMS network, is done under the Session Initiation Protocol (SIP). All references to messages that follow are SIP messages unless otherwise stated, and will be shown in capitals. It should be appreciated that although the preferred embodiments of the present invention have been described in the context of SIP, other embodiments of the invention can be implemented in non SIP environments.

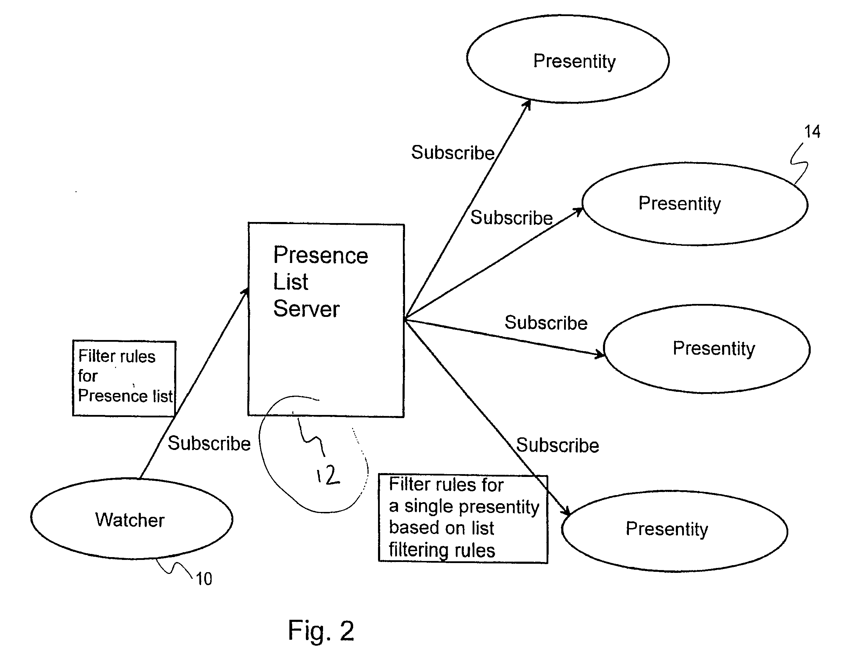

Figure 2 shows an embodiment of the invention. A watcher 10 is typically a user as discussed above. The watcher 10 is arranged to communicate with a presence list server 12. This presence list server 12 stores for the watcher one or more groups. The watcher defines these groups, the number of groups and the members of the groups. This may be subject to subscription restrictions. For example the watcher may define three groups, one containing family members, one containing work colleagues and one containing friends. The server 12 stores information identifying the members of the groups.

The presence list server 12 is arranged to be in contact with a "presentity" 14 for each user defined in the groups. A "presentity" 14 can be regarded as being a user and a presence server associated with that user. A presence server stores presence information for the users which are associated with that presence server. It should be appreciated that in practice, more than one user would be associated with each server. Thus in Figure 2, the presence list server 12 is in contact with four presentities 14. In practice, the presence list server 12 is in contact with many more than four presentities. It should also be appreciated that it is possible that all of the users in the groups of the presence list server 12 are served by the same presence server. In that case, the presence list server 12 would only need to be connected to one presence server. It should be appreciated that it is alternatively possible that at least two of the users of the groups are associated with different presence servers.

It is possible in some embodiments of the invention, that the same entity provide both a presence list server and a presence server.

It should be appreciated that in practice the connection between the watcher and the presence list server may be via other network elements or entities. Likewise, the connection between presence list server 12 and the presentities may be via other network elements. The connection between the presence server and the user defining the "presentity" may be via other network elements or entities.

In the embodiment of Figure 2, the watcher defines for at least one of his groups a set of filtering rules. These rules are predefined by the user and are stored in the presence list server in association with the respective group. It should be appreciated that the user can define a common set of filters for all the groups or can define different filters for different groups. The filters define the presence information which the user actually wants. The same set of filters can be defined for all the members of the group. In alternative embodiments of the invention, different filters can be defined for different members of the same group. It is also possible to define one or more subgroups where the members of the same subgroup have the same filters and different subgroups have different filters.

The rules may be sent to the presence list server in a SUBSCRIBE message sent from the watcher to the presence list server. Based on this information, the presence list server is able to create filtering rules for all individual subscriptions which will be sent to the presentities. When the watcher wants to find out presence information for one of his groups, the watcher sends a request to the presence list server. In response to this request the presence list server sends out requests to the presentities for presence information in a SUBSCRIBE message.

The presence list server can either request all of the presence information from the presentities for the group and then do the filtering to obtain the actual presence information required by the watcher. Alternatively, the presence list server can request only the presence information which it requires. In either case, the presence server which stores presence information for the respective user will provide the required presence information to the presence list server. The presence list server thus will have the required part of the presence information which is then forwarded to the watcher.

The filtering rules are stored in the same server in the network where the groups are stored. The watcher does not include the filter rules in the presence list subscription but the presence list server is able to add the filtering criteria to each individual subscription.

The filtering rules stored in the presence list server can be managed by the watcher using similar procedures to those used for managing other information, for example the users in groups and/or authorisation information.

The advantage of having the rules stored in the presence list server is that radio resources will be saved. This is because it is expected that the groups and the filtering rules will be relatively static, that is will not change often.

In one modification to the above described arrangement, the watcher will include the filtering rules in the SUBSCRIBE message each time that the watcher requests presence information for a group. These filtering rules may be stored at the watcher. The presence list server, will each time it receives a request check to see if the SUBSCRIBE message initialling the obtaining of the presence information for a group contains filtering rules. If so, the presence list server will create rules for all the individual subscriptions. These rules are then used as outlined above.

It should be appreciated that in some embodiments, the same rules will be applied to the users in a group. In other embodiments of the invention, it is possible that different filtering rules may be defined for different users in the group.

In alternative embodiments of the invention, the filters are stored separately from the groups. The groups may contain pointers to the correct filter information. Another alternative would be to store filters separately and send the relevant pointers to the filtering information in the SUBSCRIBE message from watcher to presence list server.

The filtering rules can be defined when the group is set up or later. The rules may be changeable in some embodiments of the present invention.

Embodiments of the present invention may have the following advantages:
1. load in the air interface may be saved. In other words the radio resources maybe saved
2. there is no need to store filtering for each group in the terminal (watcher).
3. an improvement in presence list functionality.

Presence information as currently defined in 3GPP can include the following information but is not restricted to them and the requirement from stage 1 (requirements group) which is developing the Standard is to develop a concept that enables the extension of presence information:
Subscriber status; Network status; communication means; Contact address, Subscriber provided location; Network provided location; text; priority.

Presence can also include other information like mood, favourite colour and etc. Filtering can then be based on available presence information. Filter can for example be defined like:
send_me:
   Subscriber status,
   network status
don't_send_me:
   text,
   priority

In other words the filtering rules can define what is to be sent, what is not to be sent or a combination of the two. Filtering rules can also be more complicated e.g. depending on the time of the day, value of a defined attribute etc.

In embodiments of the present invention, each group would have its own address, for example sip:list_A@provider.com. This way the presence list server would know which list to use.

In some embodiments of the invention, the groups of users can be available to one or more watchers. The watchers may use the same or different sets of filtering rules. The different rules for the different watchers may be stored at the presence list server.

In preferred embodiments of the present invention where the rules are stored, these are stored in the presence list server.

In another arrangement, the presence server or presence list server may identify a user and associate select the filters to be used on the basis of the identity of the watcher.

In embodiments of the invention, there can be an authorization procedure where the owner of the list can authorize other users to use lists created by the owner. During this authorization, owner of the list can define what kinds of filters should be used when authorized user subscribes all list members. Or it may be possible to give the right to authorised users to define the filters they prefer to use.

SIP SUBSCRIBE messages may carry list member to filter mappings i.e. request will contain for each list member a reference to filter which should be used with that particular member. One option is to deliver reference to filter in SIP SUBSCRIBE request. The reference will point to a filter or filters which will be applied to every member in the list.

The whole filter may be carried in SIP SUBSCRIBE message. Filter can be general one i.e. same filter is applied for each list member or message can contain filters for each list member individually.

In one embodiment, one option is to use filters defined by the list owner. When list is created the person who created the list is marked as the owner of that list. After list creation owner can define filter for each member of the list. When anybody uses list to subscribe all list members, filters defined by the owner are used.

A watcher may have an own filter for a (private or common) list or set of lists stored in presence list server. The reference to the filter is pre-defined in the presence server. When pre-defined the watcher has such a service in use where the mapping between filter-id and list-id is defined as part of watcher's subscription information, and no indication is needed in SUBSCRIBE.

Embodiments of the present invention may have an authorization procedure where the owner of the list can authorize other users to use lists created by the owner. During this authorization, the owner of the list can define what kinds of filters should be used when authorized user subscribes all list members

The SIP SUBSCRIBE message may carry list member to filter mappings i.e. request will contain per each list member a reference to the filter which should be used with that particular member.

In one embodiment, one option may be to deliver a reference to a filter in a SIP SUBSCRIBE request. The reference may point to a filter which will be applied to every member in the list.

The whole filter may be carried in a SIP SUBSCRIBE message. The filter can be general one i.e. the same filter may be applied for each list member or the message can contain filters for each list member individually.

In one embodiment, one option is to use filters defined by the list owner. When list is created the person who created the list is marked as the owner of that list. After list creation owner can define a filter for each member of the list. When anybody uses the list to subscribe to all list members, filters defined by the owner are used.

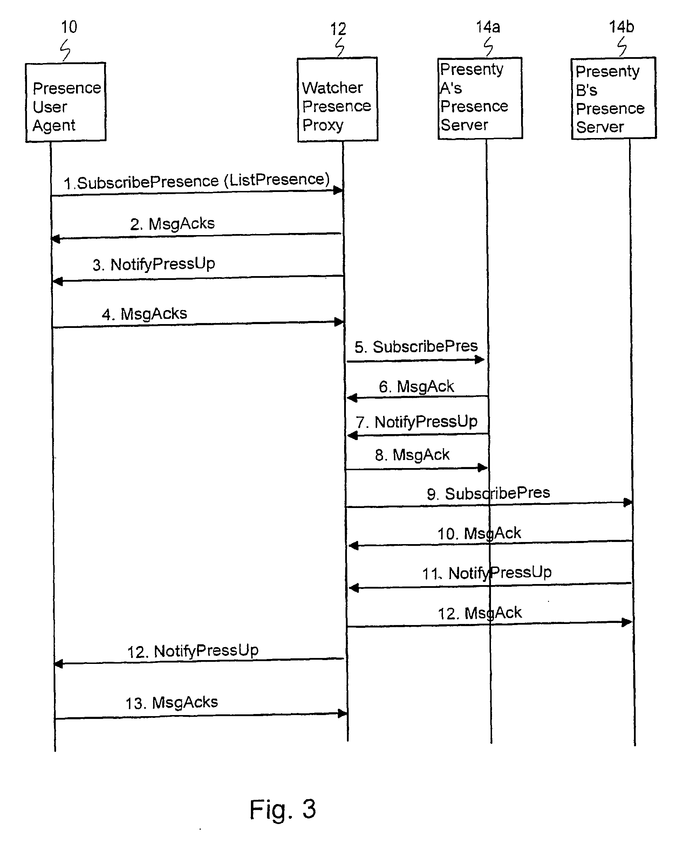

Figure 3 shows a message flow in one embodiment of the invention:
1. Send from the presence user agent 10, that is the watcher a SUBSCRIBEPRESENCE (LIST PRESENCE) message which identifies the group for which the watcher requires presence information. This is sent to the watcher presence proxy 12, that is the presence list server.
2. The watcher presence proxy 12 acknowledges the SUBSCRIBE message with a MESSAGEACKNOWLEDGE message.
3. The watcher presence proxy 12 sends a NOTIFYPRESSUP message to the presence user agent.
4. The presence user agent acknowledges the NOTIFYPRESSUP message with a MESSAGEACKNOWLEDGE message sent to the watcher presence proxy 12.
5. The watcher presence proxy 12 sends a SUBSCRIBEPRESENCE message to the server of a first presentity 14a.
6. The first presentity 14a acknowledges the SUBSCRIBEPRESENCE message with a MESSAGEACKNOWLEDGE message sent to the watcher presence proxy 12.
7. The first presentity 14a sends a NOTIFYPRESSUP message to the watcher presence proxy 12.
8. The watcher presence proxy 12 sends a MESSAGEACKNOWLEDGE message to the server of the first presentity 14a.
9. The watcher presence proxy 12 sends a SUBSCRIBEPRESENCE message to the server of a second presentity 14b.
10. The second presentity 14b acknowledges the SUBSCRIBEPRESENCE message with a MESSAGEACKNOWLEDGE message sent to the watcher presence proxy 12.
11. The second presentity 14b sends a NOTIFYPRESSUP message to the watcher presence proxy 12.
12. The watcher presence proxy 12 sends a MESSAGEACKNOWLEDGE message to the server of the second presentity 14b
13. The watcher presence proxy 12 presence user agent sends a NOTIFYPRESSUP message to the presence user agent.
14. The presence user agent acknowledges the NOTIFYPRESSUP message with a MESSAGEACKNOWLEDGE message sent to the watcher presence proxy 12.

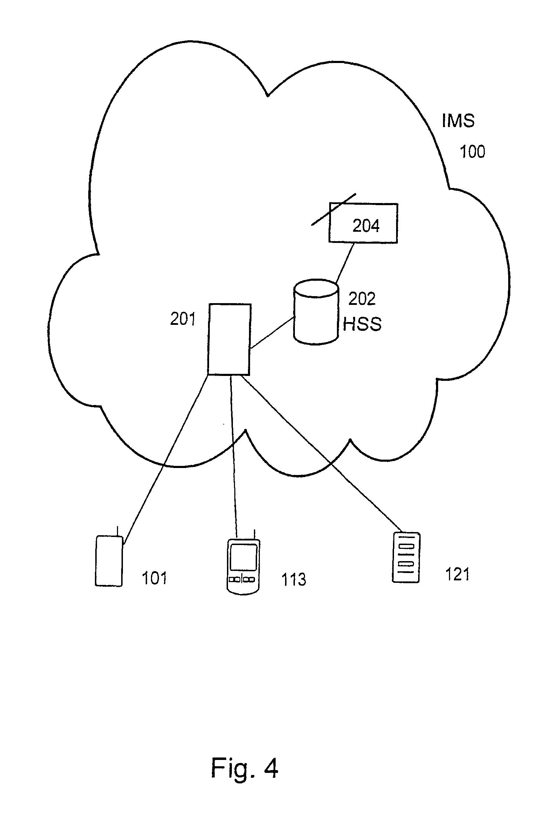

Figure 4 shows a schematic of the IMS network 100. The IMS includes various elements including several Call State Control Functions (CSCF). A CSCF is equivalent to a SIP server in the IETF architecture.

The Interrogating CSCF (I-CSCF) 201 is the basic IMS node used for terminating calls in the IMS network, functioning at the edge of the network. Here, it is shown communicating with the external nodes of a mobile terminal 101, a PDA 113, and an application server (AS) 121. It should be appreciated that the connections between the mobile terminal, the PDA and the application server to the I-CSCF may not be direct, but via a suitable intermediate network such as the mobile core network 110 for the mobile terminal, and the Internet 120 for the application server, as shown in Figure 1

The HSS 202 is a centralised user database that interfaces with both the I-CSCF and the S-CSCF, storing information on all users of the IMS. The I-CSCF uses the HSS to perform functions such as authorising of new users and retrieving routing information on the S-CSCF for forwarding messages from external elements to the S-CSCF.

The S-CSCF 206 is the IMS node responsible for invoking services related to IMS users. In this example, the S-CSCF also performs registrar functionality 203 for IMS users, processing user registrations. The presence server functionality is implemented as application server.

It should be appreciated that the description of Figure 4 is only a schematic representation and in practice additional elements such as for example a proxy-CSCF (P-CSCF) may be provided. It should also be appreciated that embodiments of the invention may be used in systems other than those shown in Figure 4.

A presence package may be used for subscribing to the presence information of any user. The semantics of the presence package means that any user can send a subscription message for presence information to the presence server, but if there is no such presence package defined, the presence server would not be able to recognise to what event the user was trying to subscribe to. Therefore, the presence package needs to be defined at the presence server, which can then receive and recognise that the subscription message for the associated event for changes in presence information. The presence server creates a state linked to the presence information, and when any change in the presence information occurs, it will trigger a response or notification.

It should be appreciated that although embodiments of the present invention have been described in the context of 3G using SIP, other suitable systems and interface protocols could be used. In particular, embodiments of the present invention may be used in application in accordance with IETF specifications.

It should also noted herein that while the above describes exemplifying embodiments of the invention, there are several variations and modifications which may be made to the disclosed solution without departing from the scope of the present invention as defined in the appended claims.

## Claims

1. A communication system comprising:
a plurality of users with which presence information is associated, said presence information comprising a plurality of parts; and
a presence list server (12) for:
storing information defining at least one group, said group containing a plurality of users (14);
storing predefined filtering rules defining for said at least one user (10) of said group what parts of said presence information are to be provided to a requester (10) in response to a request for presence information for at least one of said at least one groups from said requester (10), said filtering rules being defined by said requester; and
wherein said user is provided a service in use where a mapping between an identity of the predefined filtering rules and an identity of at least one group is defined as part of subscription information of said user, and no indication of said filtering rules is needed in a subscribe message.

2. A system as claimed in claim 1, wherein said requester (10) is one of said plurality of said users (14).

3. A system as claimed in claim 1 or 2, wherein said parts of said presence information is available only to one requester (10) or to a plurality of requesters.

4. A system as claimed in claim 1, 2 or 3, wherein said parts of said information provided is dependent on the identity of the requester (10).

5. A system as claimed in claim 4, comprising means for determining the identity of the requester (10) making said request.

6. A system as claimed in any preceding claim, wherein a separate address is provided for each of a plurality of groups.

7. A system as claimed in any preceding claim wherein said users comprise user equipment.

8. A system as claimed in any preceding claim, wherein said presence information comprises at least one of the following parts of information: Subscriber status; Network status; communication means; Contact address, Subscriber provided location; Network provided location; text; priority; mood, favourite colour

9. A system as claimed in any preceding claim, wherein said presence list server (12) provides information as to the parts of said presence information required.

10. A system as claimed in any preceding claim, wherein said presence list server (12) provides information as to the parts of said presence information not required.

11. A system as claimed in any preceding claim, wherein the parts of the presence information to be obtained is the same for all of at least one group.

12. A system as claimed in any of claims 1 to 10, wherein the parts of the presence information to be obtained are different for at least two users at least one group.

13. A system as claimed in any preceding claim, wherein the system operates in accordance with a session initiation protocol (SIP).

14. A system as claimed in any preceding claim, wherein said presence list server is arranged to receive presence information from the users of said group.

15. A system as claimed in claim 14, wherein said presence list server (12) is arranged to provide the parts of the presence information to be provided.

16. A system as claimed in any of claims 1 to 14, wherein an entity associated with a user (10) or a user (10) of the group is arranged to provide the parts of the presence information to be provided.

17. A system as claimed in claim 16, wherein said entity comprises a presence server (12; 14).

18. A communication method comprising the steps of:
defining and storing in a presence list server at least one group, said group containing a plurality of users (14) with which presence information is associated, said presence information comprising a plurality of parts;
defining predefined filtering rules for said users (10) of said group, said filtering rules defining what parts of said presence information are to be provided, to a requester (10) in response to request for presence information for at least one of said at least one groups from said requester (10), said filtering rules being defined by said requester and stored in said presence list server, and
providing to said user a service where a mapping between an identity of the predefined filtering rules and an identity of at least one group is defined as part of subscription information of said user, and no indication of said filtering rules is needed in a subscribe message.

19. A method as claimed in claim 18, comprising the step of filtering in accordance with the filtering rules the presence information for users of the group to obtain the defined parts of said presence information.

20. A method as claimed in claim 18 or 19, comprising the step of requesting for at least one user of said group said defined parts of said presence information.

21. A presence list server for storing (12) first information defining at least one group, said group containing a plurality of users with which presence information is associated, said presence information comprising a plurality of parts, and predefined filtering rules defining for said at least one user of said group what parts of said presence information are to be provided to a requester (10) in response to request for presence information for at least one of said at least one groups from said requester (10), said predefined filtering rules being defined by said requester, wherein said user is provided a service in use where a mapping between an identity of the predefined filtering rules and an identity of at least one group is defined as part of subscription information of said user, and no indication of said filtering rules is needed in a subscribe message.

## Patentansprüche

1. Kommunikationssystem, umfassend:
mehrere Benutzer, mit denen Präsenzinformationen assoziiert sind, wobei die Präsenzinformationen mehrere Teile umfassen; und
einen Präsenzlistenserver (12) zum
Speichern von Informationen, die mindestens eine Gruppe definieren, wobei die Gruppe mehrere Benutzer enthält (14);
Speichern von vordefinierten Filterregeln, die für den mindestens einen Benutzer (10) der Gruppe definieren, welche Teile der Präsenzinformationen einem Anforderer (10) als Reaktion auf eine Anforderung von Präsenzinformationen für mindestens eine der mindestens einen Gruppe von dem Anforderer (10) bereitzustellen sind, wobei die Filterregeln durch den Anforderer definiert werden; und
wobei dem Benutzer im Gebrauch ein Dienst bereitgestellt wird, wobei eine Abbildung zwischen einer Identität der vordefinierten Filterregeln und einer Identität mindestens einer Gruppe als Teil von Subskriptionsinformationen des Benutzers definiert ist und keine Angabe der Filterregeln in einer Subskribiernachricht notwendig ist.

2. System nach Anspruch 1, wobei der Anforderer (10) einer der mehreren Benutzer (14) ist.

3. System nach Anspruch 1 oder 2, wobei die Teile der Präsenzinformationen nur einem Anforderer (10) oder mehreren Anforderern verfügbar sind.

4. System nach Anspruch 1, 2 oder 3, wobei die bereitgestellten Teile der Informationen von der Identität des Anforderers (10) abhängen.

5. System nach Anspruch 4 mit Mitteln zum Bestimmen der Identität des Anforderers (10), der die Anforderung stellt.

6. System nach einem der vorhergehenden Ansprüche, wobei für jede von mehreren Gruppen eine separate Adresse bereitgestellt wird.

7. System nach einem der vorhergehenden Ansprüche, wobei die Benutzer Benutzergeräte umfassen.

8. System nach einem der vorhergehenden Ansprüche, wobei die Präsenzinformationen mindestens einen der folgenden Teile von Informationen umfassen: Subskribentenstatus; Netzstatus; Kommunikationsmittel; Kontaktadresse, vom Subskribenten bereitgestellter Ort; vom Netz bereitgestellter Ort; Text; Priorität; Laune, Lieblingsfarbe.

9. System nach einem der vorhergehenden Ansprüche, wobei der Präsenzlistenserver (12) Informationen hinsichtlich der erforderlichen Teile der Präsenzinformationen bereitstellt.

10. System nach einem der vorhergehenden Ansprüche, wobei der Präsenzlistenserver (12) Informationen hinsichtlich der nichterforderlichen Teile der Präsenzinformationen bereitstellt.

11. System nach einem der vorhergehenden Ansprüche, wobei die zu erhaltenden Teile der Präsenzinformationen für alle mindestens einer Gruppe gleich sind.

12. System nach einem der Ansprüche 1 bis 10, wobei die zu erhaltenden Teile der Präsenzinformationen für mindestens zwei Benutzer mindestens einer Gruppe verschieden sind.

13. System nach einem der vorhergehenden Ansprüche, wobei das System gemäß einem Session Initiation Protocol (SIP) arbeitet.

14. System nach einem der vorhergehenden Ansprüche, wobei der Präsenzlistenserver dafür ausgelegt ist, Präsenzinformationen von den Benutzern der Gruppe zu empfangen.

15. System nach Anspruch 14, wobei der Präsenzlistenserver (12) dafür ausgelegt ist, die bereitzustellenden Teile der Präsenzinformationen bereitzustellen.

16. System nach einem der Ansprüche 1 bis 14, wobei eine mit einem Benutzer (10) assoziierte Entität oder ein Benutzer (10) der Gruppe dafür ausgelegt ist, die bereitzustellenden Teile der Präsenzinformationen bereitzustellen.

17. System nach Anspruch 16, wobei die Entität einen Präsenzserver (12; 14) umfasst.

18. Kommunikationsverfahren mit den folgenden Schritten:
Definieren und Speichern mindestens einer Gruppe in einem Präsenzlistenserver, wobei die Gruppe mehrere Benutzer (14) enthält, mit denen Präsenzinformationen assoziiert sind, wobei die Präsenzinformationen mehrere Teile umfassen;
Definieren von vordefinierten Filterregeln für die Benutzer (10) der Gruppe, wobei die Filterregeln definieren, welche Teile der Präsenzinformationen einem Anforderer (10) als Reaktion auf eine Anforderung von Präsenzinformationen für mindestens eine der mindestens einen Gruppe von dem Anforderer (10) bereitzustellen sind, wobei die Filterregeln durch den Anforderer definiert werden, und in dem Präsenzlistenserver gespeichert werden und
Bereitstellen eines Dienstes für den Benutzer, wobei eine Abbildung zwischen einer Identität der vordefinierten Filterregeln und einer Identität mindestens einer Gruppe als Teil von Subskriptionsinformationen des Benutzers definiert ist und keine Angabe der Filterregeln in einer Subskribiernachricht notwendig ist.

19. Verfahren nach Anspruch 18 mit dem Schritt des Filterns der Präsenzinformationen für Benutzer der Gruppe gemäß den Filterregeln, um die definierten Teile der Präsenzinformationen zu erhalten.

20. Verfahren nach Anspruch 18 oder 19 mit dem Schritt des Anforderns der definierten Teile der Präsenzinformationen für mindestens einen Benutzer der Gruppe.

21. Präsenzlistenserver zum Speichern (12) von ersten Informationen, die mindestens eine Gruppe definieren, wobei die Gruppe mehrere Benutzer enthält, mit denen Präsenzinformationen assoziiert sind, wobei die Präsenzinformationen mehrere Teile umfassen, und von vordefinierten Filterregeln, die für mindestens einen Benutzer der Gruppe definieren, welche Teile der Präsenzinformationen einem Anforderer (10) als Reaktion auf eine Anforderung von Präsenzinformationen für mindestens eine der mindestens einen Gruppe von dem Anforderer (10) bereitzustellen sind, wobei die vordefinierten Filterregeln von dem Anforderer definiert werden, wobei dem Benutzer im Gebrauch ein Dienst bereitgestellt wird, wobei eine Abbildung zwischen einer Identität der vordefinierten Filterregeln und einer Identität mindestens einer Gruppe als Teil von Subskriptionsinformationen des Benutzers definiert ist und keine Angabe der Filterregeln in einer Subskribiernachricht notwendig ist.

## Revendications

1. Un système de communication comprenant :
une pluralité d'utilisateurs auxquels des informations de présence sont associées, lesdites informations de présence comprenant une pluralité de parties, et
un serveur de listes de présence (12) destiné à :
conserver en mémoire des informations définissant au moins un groupe, ledit groupe contenant une pluralité d'utilisateurs (14),
conserver en mémoire des règles de filtrage prédéfinies définissant pour ledit au moins un utilisateur (10) dudit groupe les parties desdites informations de présence qui doivent être fournies à un demandeur (10) en réponse à une demande d'informations de présence pour au moins un desdits au moins un groupe provenant dudit demandeur (10), lesdites règles de filtrage étant définies par ledit demandeur, et
dans lequel ledit utilisateur se voit fournir un service en utilisation dans lequel une mise en correspondance entre une identité des règles de filtrage prédéfinies et une identité d'au moins un groupe est définie en tant que partie d'informations d'abonnement dudit utilisateur, et aucune indication desdites règles de filtrage n'est nécessaire dans un message d'abonnement.

2. Un système selon la revendication 1, dans lequel ledit demandeur (10) est l'un de ladite pluralité desdits utilisateurs (14).

3. Un système selon la revendication 1 ou 2 dans lequel lesdites parties desdites informations de présence sont à la disposition de seulement un demandeur (10) ou d'une pluralité de demandeurs.

4. Un système selon la revendication 1, 2 ou 3, dans lequel lesdites parties desdites informations fournies dépendent de l'identité du demandeur (10).

5. Un système selon la revendication 4, comprenant un moyen de détermination de l'identité du demandeur (10) effectuant ladite demande.

6. Un système selon l'une quelconque des revendications précédentes, dans lequel une adresse distincte est fournie pour chaque groupe d'une pluralité de groupes.

7. Un système selon l'une quelconque des revendications précédentes, dans lequel lesdits utilisateurs sont équipés d'un équipement d'utilisateur.

8. Un système selon l'une quelconque des revendications précédentes, dans lequel lesdites informations de présence comprennent au moins une des parties d'informations suivantes : statut de l'abonné, statut du réseau, moyen de communication, adresse de contact, emplacement fourni par l'abonné, emplacement fourni par le réseau, texte, priorité, humeur, couleur favorite.

9. Un système selon l'une quelconque des revendications précédentes, dans lequel ledit serveur de listes de présence (12) fournit des informations relatives aux parties desdites informations de présence demandées.

10. Un système selon l'une quelconque des revendications précédentes, dans lequel ledit serveur de listes de présence (12) fournit des informations relatives aux parties desdites informations de présence non demandées.

11. Un système selon l'une quelconque des revendications précédentes, dans lequel les parties des informations de présence à obtenir sont les mêmes pour tous d'au moins un groupe.

12. Un système selon l'une quelconque des revendications 1 à 10, dans lequel les parties des informations de présence à obtenir sont différentes pour au moins deux utilisateurs d'au moins un groupe.

13. Un système selon l'une quelconque des revendications précédentes, dans lequel le système fonctionne selon un protocole d'ouverture de session (SIP).

14. Un système selon l'une quelconque des revendications précédentes, dans lequel ledit serveur de listes de présence est agencé de façon à recevoir des informations de présence provenant des utilisateurs dudit groupe.

15. Un système selon la revendication 14, dans lequel ledit serveur de listes de présence (12) est agencé de façon à fournir les parties des informations de présence à fournir.

16. Un système selon l'une quelconque des revendications 1 à 14, dans lequel une entité associée à un utilisateur (10) ou à un utilisateur (10) du groupe est agencée de façon à fournir les parties des informations de présence à fournir.

17. Un système selon la revendication 16, dans lequel ladite entité comprend un serveur de présence (12, 14).

18. Un procédé de communication comprenant les opérations suivantes :
la définition et la mise en mémoire dans un serveur de listes de présence d'au moins un groupe, ledit groupe contenant une pluralité d'utilisateurs (14) auxquels des informations de présence sont associées, lesdites informations de présence comprenant une pluralité de parties,
la définition de règles de filtrage prédéfinies pour lesdits utilisateurs (10) dudit groupe, lesdites règles de filtrage prédéfinies définissant les parties desdites informations de présence qui doivent être fournies à un demandeur (10) en réponse à une demande d'informations de présence pour au moins un desdits au moins un groupe provenant de dudit demandeur (10), lesdites règles de filtrage étant définies par ledit demandeur et conservées en mémoire dans ledit serveur de listes de présence, et
la fourniture audit utilisateur d'un service dans lequel une mise en correspondance entre une identité des règles de filtrage prédéfinies et une identité d'au moins un groupe est définie en tant que partie d'informations d'abonnement dudit utilisateur, et aucune indication desdites règles de filtrage n'est nécessaire dans un message d'abonnement.

19. Un procédé selon la revendication 18, comprenant l'opération de filtrage selon les règles de filtrage des informations de présence pour des utilisateurs du groupe de façon à obtenir les parties définies desdites informations de présence.

20. Un procédé selon la revendication 18 ou 19, comprenant l'opération de demande pour au moins un utilisateur dudit groupe desdites parties définies desdites informations de présence.

21. Un serveur de listes de présence destiné à conserver en mémoire (12) une première information définissant au moins un groupe, ledit groupe contenant une pluralité d'utilisateurs auxquels des informations de présence sont associées, lesdites informations de présence comprenant une pluralité de parties, et des règles de filtrage prédéfinies définissant pour ledit au moins un utilisateur dudit groupe les parties desdites informations de présence qui doivent être fournies à un demandeur (10) en réponse à une demande d'informations de présence pour au moins un desdits au moins un groupe provenant dudit demandeur (10), lesdites règles de filtrage étant définies par ledit demandeur, dans lequel ledit utilisateur se voit fournir un service en utilisation dans lequel une mise en correspondance entre une identité des règles de filtrage prédéfinies et une identité d'au moins un groupe est définie dans le cadre d'informations d'abonnement dudit utilisateur, et aucune indication desdites règles de filtrage n'est nécessaire dans un message d'abonnement.
